**Europäisches Patentamt**

**European Patent Office**

**Office européen des brevets**

(19)

(11) Veröffentlichungsnummer : **0 389 834 B1**

(12) **EUROPÄISCHE PATENTSCHRIFT**

(45) Veröffentlichungstag der Patentschrift :
06.05.92 Patentblatt 92/19

(51) Int. Cl.⁵ : **F02B 27/02**

(21) Anmeldenummer : **90104308.3**

(22) Anmeldetag : **07.03.90**

(54) **Saugrohranlage für eine Mehrzylinder-Brennkraftmaschine.**

(30) Priorität : **25.03.89 DE 3909837**

(43) Veröffentlichungstag der Anmeldung :
**03.10.90 Patentblatt 90/40**

(45) Bekanntmachung des Hinweises auf die
Patenterteilung :
**06.05.92 Patentblatt 92/19**

(84) Benannte Vertragsstaaten :
**DE FR GB**

(56) Entgegenhaltungen :
**DE-A- 3 434 476
DE-A- 3 633 929
PATENT ABSTRACTS OF JAPAN vol. 10, no.
171 (M-489)(2227) 17 Juni 1986, & JP-A-61
19926 (HONDA) 28 Januar 1986,**

(73) Patentinhaber : **AUDI AG
Auto-Union-Strasse 1 Postfach 220
W-8070 Ingolstadt (DE)**

(72) Erfinder : **Van Basshuysen, Richard
Pfarrer-Rosskopf-Strasse 3
W-7101 Bad Wimpfen (DE)**
Erfinder : **Bauder, Armin
Fellbacher Weg 14
W-7107 Neckarsulm (DE)**

(74) Vertreter : **Speidel, Eberhardt
Postfach 1320 Waldpromenade 26
W-8035 Gauting (DE)**

## Beschreibung

Die Erfindung bezieht sich auf eine Saugrohranlage für eine Mehrzylinder-Brennkraftmaschine entsprechend dem Oberbegriff des Anspruchs 1.

Mit einer derartigen, aus der JP-A-61 19926 bekannten Saugrohranlage gelingt es, durch Absperren des kurzen Einzelsaugrohres im unteren Drehzahlbereich ein hohes Drehmoment und durch Zuschalten des kurzen Einzelsaugrohres im mittleren und oberen Drehzahlbereich den Füllungsgrad und damit die Leistung der Brennkraftmaschine bedeutend zu steigern, da beide in diesem Drehzahlbereich wirksamen Einzelsaugrohre die gleiche Länge und den gleichen Querschnitt und somit das gleiche Schwingungsverhalten haben. Probleme ergeben sich jedoch beim Betrieb im unteren Drehzahlbereich, in welchem nur das längere Saugrohr wirksam ist. Da dieses Saugrohr den gleichen Querschnitt wie das kürzere Saugrohr, muß es erheblich länger sein als das kürzere Saugrohr, um im unteren Drehzahlbereich optimale Schwingungsverhältnisse zu erreichen. Dies hat einen großen Platzbedarf zur Folge, der im Motorraum eines Kraftfahrzeuges normalerweise nicht zur Verfügung steht. Praktisch unmöglich wird die Anwendung dieses bekannten Prinzips, wenn mehr als zwei Einzelsaugrohre pro Zylinder vorgesehen sind, da dann das erste Einzelsaugrohr erheblich länger als das zweite Einzelsaugrohr und dieses wiederrum erheblich länger als das dritte Einzelsaugrohr ausgeführt werden muß.

Der Erfindung liegt die Aufgabe zugrunde, eine Saugrohranlage der gattungsgemäßen Art zu schaffen, das mit möglichst geringem Platzbedarf einerseits im unteren Drehzahlbereich ein hohes Drehmoment und andererseits im oberen Drehzahlbereich einen hohen Füllungsgrad ermöglicht.

Diese Aufgabe wird erfindungsgemäß durch die im Kennzeichen des Anspruchs 1 angegebenen Merkmale gelöst.

Bei dem erfindungsgemäßen Vorschlag wird also beim Zuschalten eines kürzeren Einzelsaugrohres nicht nur die Länge, sondern auch der Querschnitt des längeren Einzelsaugrohres auf den Querschnitt des kürzeren Einzelsaugrohres geändert. Damit ergibt sich nun die Möglichkeit, mit einem gegenüber dem Stand der Technik verkürzten langen Einzelsaugrohr, das im unteren Drehzahlbereich allein eingeschaltet ist, optimale Schwingungsverhältnisse für diesen Drehzahlbereich zu erhalten. Hierdurch wird der Platzbedarf der Saugrohranlage reduziert.

Es ist zwar bekannt (siehe DE-A-34 34 476), daß für den unteren Drehzahlbereich ein langes dünnes und für den mittleren und oberen Drehzahlbereich ein kurzes dickes Saugrohr vorteilhaft ist. Bei dieser bekannten Ausführung trägt jedoch das auf die Verhältnisse im unteren Drehzahlbereich ausgelegte lange und dünnes Saugrohr nur wenig zur Füllung im oberen Drehzahlbereich bei. Im Gegensatz dazu hat bei dem erfindungsgemäßen Vorschlag das längere Saugrohr im oberen Drehzahl die gleiche wirksame Länge und den gleichen Querschnittsverlauf wie das kürzere Saugrohr, so daß es in gleichem Maße zur Füllung beiträgt wie das kürzere Saugrohr.

Die Queschnittsvergrößerung des bzw. der längeren Einzelsaugrohre kann in Stufen erfolgen oder stetig verlaufen. In jedem Fall sollen alle Einlaßventile, wie bekannt, gleiche Durchmesser haben.

Vorteile Weiterbildungen der Erfindung ergeben sich aus den Unteransprüchen.

Einige Ausführungsbeispiele werden im folgenden unter Bezugnahme auf die Zeichnungen beschrieben. Es zeigt:

Figur 1 in schematischer Darstellung eine Saugrohranlage für einen Zylinder einer Mehrzylinder-Brennkraftmaschine,

Figur 2 einen Längsschnitt des mittleren Einzelsaugrohres von Figur 1,

Figur 3 ein Diagramm, in dem der $P_e$-Verlauf über der Drehzahl dargestellt ist, der durch die aufeinanderfolgende Zuschaltung der Einzelsaugrohre von Figur 1 erreicht wird,

Figur 4 eine vereinfachte Saugrohranlage für einen Zylinder mit drei Einlaßventilen,

Figur 5 eine Saugrohranlage für einen Zylinder mit zwei Einlaßventilen, und

Figur 6 ein Diagramm ähnlich Figur 3 für die Saugrohranlage von Figur 5.

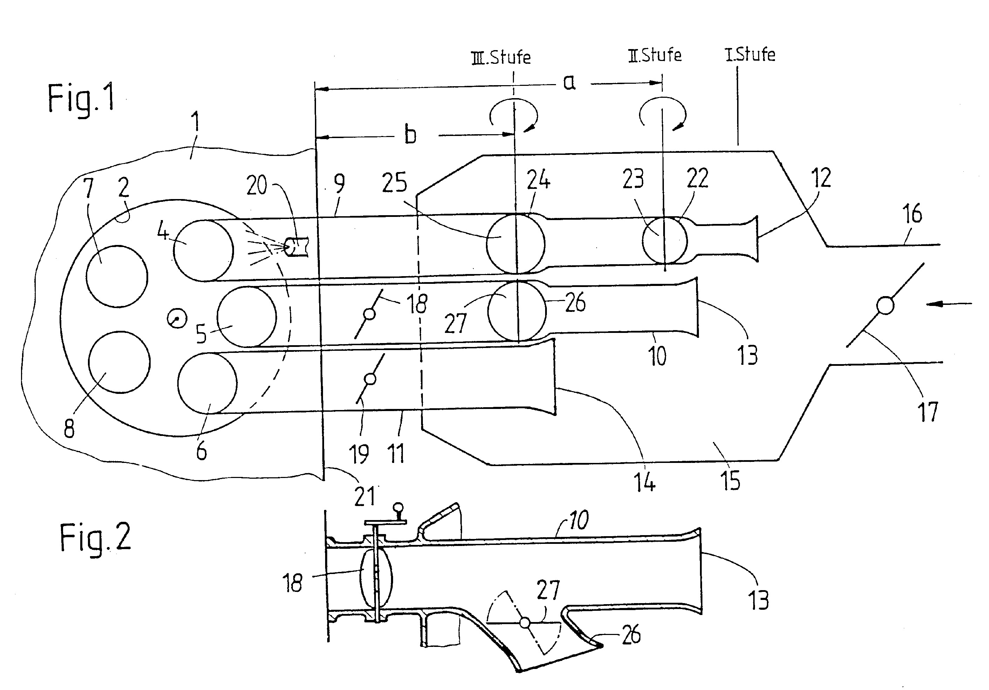

Es sei zunächst auf Figur 1 Bezug genommen, in der eine Teilansicht eines Zylinderkopfes 1 einer Mehrzylinder-Brennkraftmaschine dargestellt ist. Mit 2 ist ein Brennraum eines Zylinders bezeichnet, der drei Einlaßventile 4, 5, 6 und zwei Auslaßventile 7 und 8 aufweist. Zu den Einlaßventilen 4, 5 und 6 führen Einzelsaugrohre 9, 10 und 11, deren Mündungen 12, 13 und 14 in einem gemeinsamen Saugkasten 15 liegen, der an einer Lufteinlaßleitung 16 mit einer willkürlich betätigbaren Drosselklappe 17 angeschlossen ist.

Das Einzelsaugrohr 9 für das erste Einlaßventil 4 ist zur Erzielung eines hohen Drehmoments im unteren Drehzahlbereich ausgelegt und daher verhältnismäßig lang. Das Einzelsaugrohr 10 für das zweite Einlaßventil 5 ist kürzer als das erste Einzelsaugrohr 9, und das dritte Einzelsaugrohr 11 für das Einlaßventil 6 ist wiederum kürzer als das zweite Einzelsaugrohr 10. In den Einzelsaugrohren 10 und 11 sind nahe dem Zylinderkopf 1 Absperrklappen 18 bzw. 19 vorgesehen, durch die die Einzelsaugrohre 10 und 11 mit steigender Drehzahl nacheinander zugeschaltet werden können.

Mit 20 ist eine Kraftstoff-Einspritzdüse bezeichnet, die im Einzelsaugrohr 9 bzw. in dem daran anschließenden Einlaßkanal des ersten Einlaßventils 4 angeordnet ist und den Kraftstoffbedarf für den gesamten Betriebsbereich der Brennkraftmaschine liefert. Grundsätzlich wäre es jedoch auch denkbar, in bekannter Weise für jeden Einlaßkanal eine eigene Einspritzdüse vorzusehen.

Um im mittleren und hohen Drehzahlbereich einen hohen Füllungsgrad zu erhalten, ist vorgesehen, daß jedes längere Einzelsaugrohr beim Zuschalten eines kürzeren Einzelsaugrohres auf dessen Länge verkürzt wird. Zu diesem Zweck ist das erste Einzelsaugrohr 9 in einem Abstand $\underline{a}$ von der Flanschfläche 21 des Zylinderkopfes 1, welcher der Länge des zweiten Einzelsaugrohres 10 entspricht, mit einer ersten Einströmöffnung 22 versehen, die von einer Schaltklappe 23 beherrscht wird. Eine zweite Einströmöffnung 24 ist im ersten Einzelsaugrohr 9 in einem Abstand $\underline{b}$ von der Flanschfäche 21 des Zylinderkopfes 1 angeordnet, der der Länge des dritten Einzelsaugrohres 11 entspricht. Die Einströmöffnung 24 wird durch eine Schaltklappe 25 beherrscht. In analoger Weise ist das zweite Einzelsaugrohr 10 im Abstand $\underline{b}$ von der Flanschfläche 21 des Zylinderkopfes 1 mit einer Einströmöffnung 26 versehen, die von einer Schaltklappe 27 beherrscht wird. Der Anschluß der Einströmöffnung 26 an das zweite Einzelsaugrohr 10 ist aus Figur 2 ersichtlich. Die Einströmöffnungen 22 und 24 sind in analoger Weise an das erste Einzelsaugrohr 9 angeschlossen.

Im unteren Drehzahlbereich der Brennkraftmaschine sind die Absperrklappen 18 und 19 geschlossen, so daß nur das erste, lange Einzelsaugrohr 9 wirksam ist. Dadurch wird ein hohes Drehmoment in diesem Drehzahlbereich erreicht. Mit steigender Drehzahl wird die Absperrklappe 18 geöffnet und damit das zweite Einzelsaugrohr 9 zugeschaltet. Gleichzeitig wird die Schaltklappe 23 geöffnet, so daß sich die wirksame Länge des ersten Einzelsaugrohrs 9 auf die Länge $\underline{a}$ des zweiten Einzelsaugrohres 10 verkürzt. Bei weiter steigender Drehzahl wird auch die Absperrklappe 19 geöffnet und dadurch das dritte Einzelsaugrohr 11 zugeschaltet. Gleichzeitig werden die Schaltklappen 25 und 27 geöffnet, wodurch die wirksame Länge der beiden ersten Saugrohre 9 und 10 auf die Länge $\underline{b}$ des dritten Einzelsaugrohrs 11 verkürzt wird. Da die Schaltklappen 25 und 27 gleichzeitig betätigt werden, können sie auf einer gemeinsamen Welle angeordnet werden. Die Absperrklappen 18 und 19 und die Schaltklappen 23, 25 und 27 haben vorzugsweise nur eine offene und eine geschlossene Stellung, sind jedoch vorzugsweise bedämpft, um den Schaltstoß zu verringern. Die Regelung der Leistung der Brennkraftmaschine erfolgt in üblicher Weise durch die Drosselklappe 17.

Zusätzlich zu der Verkürzung der längeren Einzelsaugrohre beim Zuschalten der kürzeren Einzelsaugrohre ist bei dem Ausführungsbeispiel gemäß Figur 1 auch eine Veränderung der Querschnitte der längeren Einzelsaugrohre vorgesehen. Wie ersichtlich, ist der Querschitt des ersten Einzelsaugrohres 9 zwischen den Einströmöffnungen 22 und 24 auf den Querschnitt des zweiten Einzelsaugrohres 10 zwischen dessen Mündung 13 und der Einströmöffnung 26 vergrößert, und in entsprechender Weise sind die Abschnitte der Saugrohre 9 und 10 zwischen den Einströmöffnungen 24 bzw. 26 und der Flanschfläche 21 des Zylinderkopfes 1 auf den Querschnitt des dritten Einzelsaugrohres 11 vergrößert. Dadurch herrschen in allen eingeschalteten Einzelsaugrohren die gleichen Verhältnisse, d.h. gleiche Schwingrohrlänge und gleicher Strömungswiderstand.

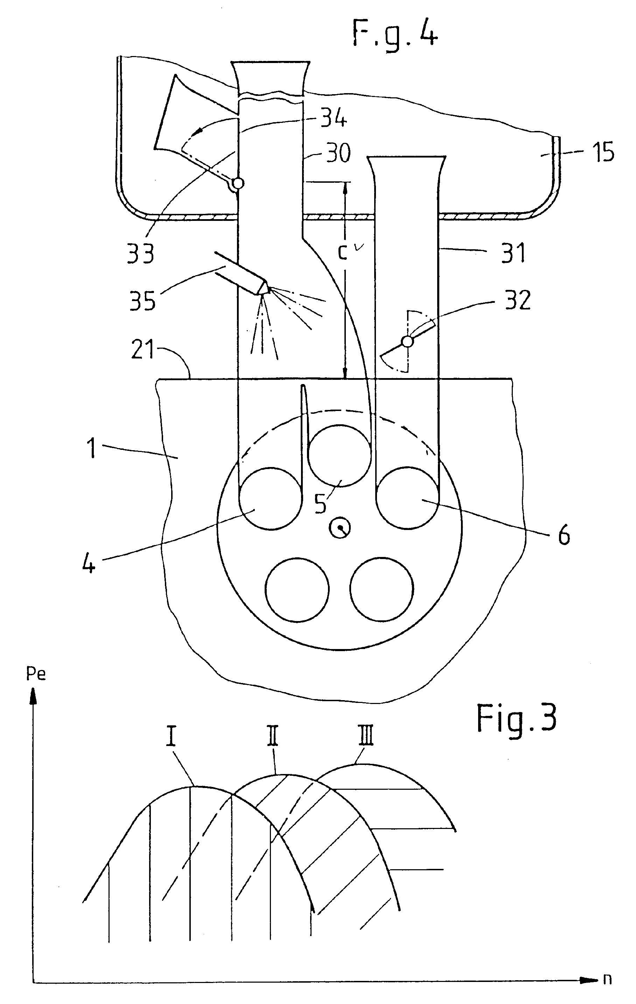

Das in Figur 3 dargestellte Diagramm zeigt den $P_e$-Verlauf über der Drehzahl, der mit der Saugrohranlage gemäß Figur 1 erreicht werden kann. Dabei ist

I. der $P_e$-Verlauf in der 1. Stufe, d.h. bei abgeschalteten Einzelsaugrohren 10 und 11,

II. der $P_e$-Verlauf in der 2. Stufe, d.h. beim Öffnen der Absperrklappe 18 und der Schaltklappe 23,

III. der $P_e$-Verlauf in der 3. Stufe, d.h. bei zusätzlichem Öffnen der Absperrklappe 19 und der Schaltklappen 25 und 27.

Wie ersichtlich, ergibt sich über den gesamten Drehzahlbereich ein hoher Mitteldruck und ein entsprechend hohes Drehmoment. Die Absperrklappen 18 und 19 und die Schaltklappen 23, 25 und 27 sind vorzugsweise kennfeldgesteuert, und zwar derart, daß das Zuschalten eines kürzeren Einzelsaugrohres und die gleichzeitige entsprechende Verkürzung des oder der längeren Einzelsaugrohre erst dann erfolgt, wenn der Mitteldruckbereich, der von dem oder den längeren Einzelsaugrohren umfaßt ist, weitgehend ausgenutzt ist. In Figur 3 ist der Mitteldruckbereich, der von dem ersten Einzelsaugrohr 9 umfaßt wird, durch senkrechte Schraffierung, der Mitteldruckbereich, der beim Zuschalten des zweiten Einzelsaugrohres 10 zusätzlich umfaßt wird, schräg schraffiert, und der Mitteldruckbereich, der durch Zuschalten des dritten Einzelsaugrohres 11 zusätzlich umfaßt wird, waagerecht schraffiert.

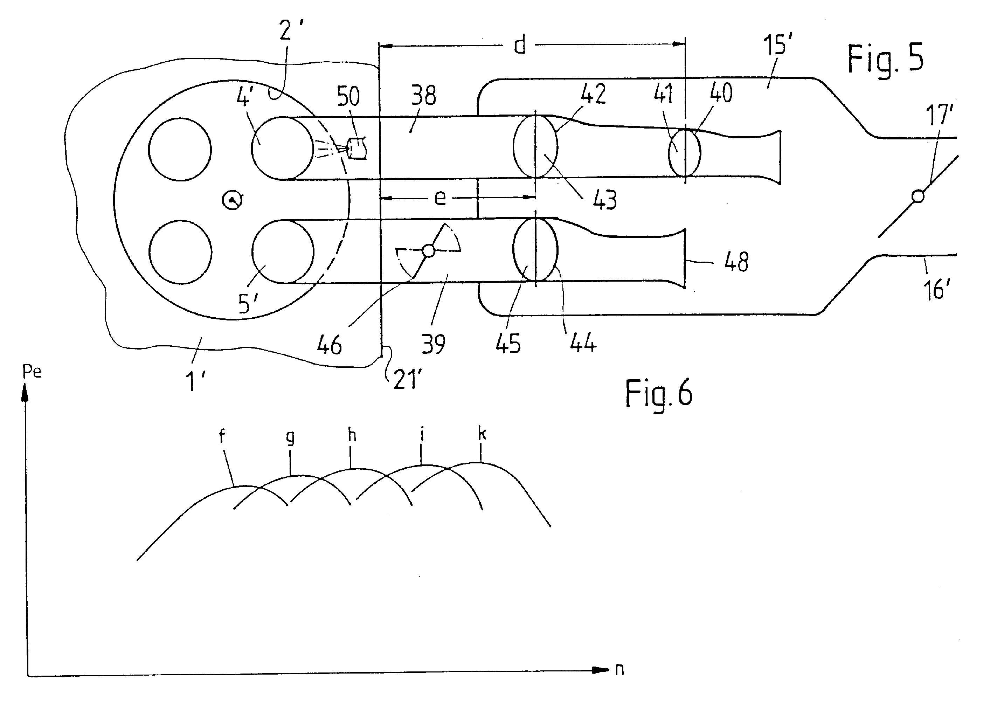

Beim Ausführungsbeispiel gemäß Figur 4 sind für eine Brennkraftmaschine mit drei Einlaßventilen 4, 5 und 6 pro Zylinder nur zwei Einzelsaugrohre 30 und 31 vorgesehen, wobei das erste Einzelsaugrohr 30 verhältnismäßig lang und für den unteren und mittleren Drehzahlbereich ausgelegt ist und sich zu den beiden Einlaßventilen 4 und 5 hin gabelt. Das zweite Einzelsaugrohr 31 ist verhältnismäßig kurz und für hohe Leistungsausbeute im oberen Drehzahlbereich ausgebildet und führt zu dem dritten Einlaßventil 6. Es enthält eine Absperrklappe 32, mit der es bei einer bestimmten Drehzahl zugeschaltet wird. Prinzipiell wie bei dem vorherigen Beispiel weist das erste Einzelsaugrohr 30 in einem Abstand $\underline{c}$ von der Flanschfläche 21 des Zylinderkopfes 1, der der Länge des zweiten Einzelsaugrohres 31 entspricht, eine Einströmöffnung 33 auf, die von einer Schaltklappe 34 beherrscht wird. Diese Schaltklappe 34 wird gemeinsam mit der Absperrklappe 32 bei Erreichen einer bestimmten Drehzahl geöffnet, um für die Ansaugwege aller drei Einlaßventile 4, 5 und 6 gleiche Schwingrohrlängen zu erhalten. In diesem Fall kann eine Einspritzdüse 35 so angeordnet werden, daß sie Kraftstoff in die Einlaßkanäle beider Ventile 4 und 5 einspritzt. Eine weitere Einspritzdüse kann auch in dem Einzelsaugrohr 31 angeordnet werden. Angesaugt wird wie beim ersten Ausführungsbeispiel aus dem gemeinsamen Saugkasten 15.

In Figur 5 ist eine Saugrohranlage für einen Zylinder 2' mit zwei Einlaßventilen 4' und 5' dargestellt, das ein langes, zum Einlaßventil 4' führendes erstes Einzelsaugrohr 38 und ein kurzes, zum Einlaßventil 5' führendes zweites Einzelsaugrohr 39 aufweist. Beide Einzelsaugrohre 38 und 39 saugen wie bei den vorherigen Beispielen aus einem gemeinsamen Saugkasten 15' an, der an eine Lufteinlaßleitung 16' mit einer willkürlich betätigbaren Drosselklappe 17' angeschlossen ist.

Das erste Einzelsaugrohr 38 ist in seiner Länge zur Erzielung eines hohen Drehmomentes im unteren Drehzahlbereich ausgelegt. Es weist in seinem Verlauf zwei Einströmöffnungen 40 und 42 auf, die von Schaltklappen 41 und 43 beherrscht sind. Die erste Einströmöffnung 40 ist in einem Abstand $\underline{d}$ von der Flanschfläche 21' des Zylinderkopfes 1' angeordnet, der der Länge des zweiten Einzelsaugrohres 39 entspricht. Die zweite Einströmöffnung 42 ist in einem solchen Abstand von der Flanschfläche 21' des Zylinderkopfes 1 angeordnet, daß beim Öffnen der Schaltklappe 43 eine hohe Leistungsausbeute im oberen Drehzahlbereich erreicht wird. Im gleichen Abstand ist das zweite Einzelsaugrohr 39 mit einer von einer Schaltklappe 45 beherrschten Einströmöffnung 44 versehen. Außerdem ist in dem zweiten Einzelsaugrohr 39 nahe der 21 eine Absperrklappe 46 vorgesehen.

Durch entsprechende Steuerung der Klappen 41, 43, 45 und 46 läßt sich ein nahezu konstanter effektiver Mitteldruck über einen sehr weiten Drehzahlbereich erreichen. Im unteren Drehzahlbereich sind alle Klappen 41, 43, 45 und 46 geschlossen, so daß nur das erste Einzelsaugrohr 38 mit seiner gesamten Länge wirksam ist. Bei Erreichen einer bestimmten Drehzahl wird die Schaltklappe 41 geöffnet, so daß die wirksame Länge des Einzelsaugrohres 38 nunmehr der Strecke $\underline{d}$ entspricht. Zur Steigerung der Leistung kann nun die Absperrklappe 46 geöffnet werden, wodurch das zweite Einzelsaugrohr 39 zugeschaltet wird. Als nächste Stufe kann eine der Schaltklappen 43 oder 45 geöffnet werden, womit sich die Schwingrohrlänge des betreffenden Einzelsaugrohres 38 oder 39 auf den Wert $\underline{e}$ verringert und die Leistungsausbeute erhöht wird. Als nächste Stufe wird auch die zweite Schaltklappe 45 oder 43 geöffnet, so daß die Schwingrohrlänge beider Einzelsaugrohre 38 und 39 auf den Wert $\underline{e}$ verringert wird und die größtmögliche Leistungsausbeute erzielt wird. Selbstverständlich muß die durch die Einspritzdüse 50 in den Einlaßkanal des ersten Einlaßventils 4' eingespritzte Kraftstoffmenge der gesamten angesaugten Luftmenge angepaßt werden.

Wie ersichtlich, sind bei diesem Beispiel die Querschnitte der Einzelsaugrohre über ihre Länge unterschiedlich ausgeführt, und zwar derart, daß die wirksamen Abschnitte beider Einzelsaugrohre nicht nur die gleiche Länge, sondern auch den gleichen Querschnitt haben. So vergrößert sich der Querschnitt des Einzelsaugrohres 38 zwischen den Einströmöffnungen 40 und 42 auf den Querschnitt des zweiten Einzelsaugrohres 39 zwischen dessen Mündung 48 und der Einströmöffnung 44. In analoger Weise vergrößert sich der Querschnitt des ersten Einzelsaugrohres 38 in Strömungsrichtung hinter der zweiten Einströmöffnung 42 auf den Querschnitt des zweiten Einzelsaugrohres 39 zwischen der Einströmöffnung 44 und der Flanschfläche 21' des Zylinderkopfes 1'.

Der mit der Anordnung gemäß Figur 5 zur verwirklichende $P_e$-Verlauf über der Drehzahl ist in Figur 6 dargestellt. Hierbei stellen dar:

Kurve f    den Verlauf, wenn nur das Einzelsaugrohr 38 in seiner ganzen Länge wirksam ist,

Kurve g    den Verlauf, wenn die Schaltklappe 41 geöffnet ist,

Kurve h    den Verlauf, wenn auch die Absperrklappe 46 geöffnet ist,

Kurve i    den Verlauf, wenn auch die Schaltklappe 43 geöffnet ist und

Kurve k    den Verlauf, wenn auch die Schaltklappe 45 geöffnet ist.

Die Leistung der Brennkraftmaschine wird wie vorher in üblicher Weise durch die Drosselklappe 17' eingestellt.

**Patentansprüche**

1. Saugrohranlage für eine Mehrzylinder-Brennkraftmaschine mit mindestens zwei Einlaßventilen (4, 5, 6) pro Zylinder und mit längeren und kürzeren Einzelsaugrohren (9, 10, 11), die jeweils zu einem eigenen Einlaßventil führen und von denen das bzw. die kürzere(n) Einzelsaugrohr(e) (10, 11) mit zunehmender Drehzahl und/oder Last zuschaltbar ist bzw. sind, wobei die wirksame Länge jedes längeren Einzelsaugrohres (z.B. 9 oder 10) beim Zuschalten eines kürzeren Einzelsaugrohres (z. B 10 oder 11) auf dessen Länge verkürzt wird, **dadurch gekennzeichnet**, daß jedes längere Einzelsaugrohr (9, 10) einen sich in Strömungsrichtung vergrößernden Querschnitt aufweist und in einem der Länge jedes kürzeren Einzelsaugrohres (10, 11) entsprechenden Abstand (a, b) vom Zylinderkopf (1) auf den Querschnitt des kürzeren Einzelsaugrohres vergrößert ist und im Bereich dieser Querschnittsvergrößerung eine Einströmöffnung (22, 24, 26) aufweist, die von einer Schaltklappe (23, 25, 27) beherrscht ist, welche zusammen mit einer dem betreffenden kürzeren Einzelsaugrohr zugeordneten Absperrklappe (18 bzw. 19) betätigbar ist.

2. Saugrohranlage nach Anspruch 1 für eine Mehrzylinder-Brennkraftmaschine mit drei Einlaßventilen pro Zylinder, gekennzeichnet durch

a) ein kurzes erstes Einzelsaugrohr (11), das zu dem ersten Einlaßventil (6) führt und nahe seinem Ende eine Absperrklappe (19) aufweist,

b) ein mittellanges zweites Einzelsaugrohr (10), das zu dem zweiten Einlaßventil (5) führt, nahe seinem Ende eine Absperrklappe (18) sowie in einem der Länge des ersten Einzelsaugrohres (11) entsprechenden Abstand (b) vom Zylinderkopf (1) eine von einer Schaltklappe (27) beherrschte Einströmöffnung (26) aufweist und in dem Abschnitt von der Einströmöffnung (26) bis zum Zylinderkopf (1) im wesentlichen den gleichen Querschnitt hat wie das erste Einzelsaugrohr (11), der größer ist als der Querschnitt im übrigen Bereich, und

c) ein langes drittes Einzelsaugrohr (9), das zu dem dritten Einlaßventil (4) führt und in einem der Länge des zweiten Einzelsaugrohres (10) entsprechenden Abstand (a) vom Zylinderkopf (1) eine erste Einströmöffnung (22) mit einer Schaltklappe (23) und in einem der Länge des ersten Einzelsaugrohres (11) entsprechenden Abstand (b) vom Zylinderkopf eine zweite Einströmöffnung (24) mit einer Schaltklappe (25) aufweist und in dem Abschnitt von der zweiten Einströmöffnung (24) bis zum Zylinderkopf (1) im wesentlichen den gleichen Querschnitt wie das erste Einzelsaugrohr (11), in dem Abschnitt zwischen den beiden Einströmffnungen (22, 24) im wesentlichen den gleichen Querschnitt wie das zweite Einzelsaugrohr (10) zwischen dessen mündung (13) und dessen Einströmöffnung (26) und in dem Abschnitt von der Mündung (12) bis zur ersten Einströmöffnung (22) einen kleineren Querschnitt als in den beiden anderen Abschnitten hat.

3. Saugrohranlage nach Anspruch 1 für eine Mehrzylinder-Brennkraftmaschine mit drei Einlaßventilen pro Zylinder, dadurch gekennzeichnet, daß ein sich zu zwei Einlaßventilen (4, 5) hin gabelndes erstes Einzelsaugrohr (30) und ein zum dritten Einlaßventil (6) führendes, zweites kürzeres Einzelsaugrohr (31) mit einer Absperrklappe (32) vorgesehen sind und das erste Einzelsaugrohr (30) in einem der Länge des zweiten Einzelsaugrohres (31) entsprechenden Abstand (c) vom Zylinderkopf (1) eine von einer Schaltklappe (34) beherrschte Einströmöffnung (33) und vor der Gabelung eine zu beiden Einlaßventilen (4, 5) hin spritzende Einspritzdüse (35) aufweist.

4. Saugrohranlage nach Anspruch 1 für eine Mehrzylinder-Brennkraftmaschine mit zwei Einlaßventilen pro Zylinder, gekennzeichnet durch

a) ein kurzes erstes Einzelsaugrohr (39), das zu dem ersten Einlaßventil (5′) führt, nahe seinem Anschluß an den Zylinderkopf (1′) eine Absperrklappe (46) und zwischen seiner Mündung (48) und der Absperrklappe (46) eine von einer Schaltklappe (45) beherrschte Einströmöffnung (44) aufweist, und

b) ein längeres zweites Einzelsaugrohr (38), das zu dem zweiten Einlaßventil (4′) führt und in einem der Länge des ersten Einzelsaugrohres (39) entsprechenden Abstand (d) vom Zylinderkopf eine erste, von einer Schaltklappe (41) beherrschte Einströmöffnung (40) und im gleichen Abstand (e), in welchem in dem ersten Einzelsaugrohr (39) die Einströmöffnung (44) vorgesehen ist, eine zweite Einströmöffnung (42) mit einer Schaltklappe (43) aufweist, wobei der Querschnitt zwischen der zweiten Einströmöffnung (42) und dem Zylinderkopf (1′) größer als im übrigen Bereich und im wesentlichen gleich dem Querschnitt des ersten Einzelsaugrohres (39) zwischen dessen Einströmöffnung (44) und dem Zylinderkopf (1′) ist.

## Revendications

1. Système de conduits d'admission pour un moteur à combustion interne à plusieurs cylindres, comprenant au moins deux soupapes d'admission (4, 5, 6) par cylindre et des conduits d'admission individuels plus longs et plus courts (9, 10, 11) qui mènent respectivement à une soupape d'admission particulière et dont le(s) conduit(s) d'admission individuel(s) plus court(s) (10, 11) peut (peuvent) être mis en circuit au fur et à mesure que la vitesse de rotation et/ou la charge augmente, la longueur active de chaque conduit d'admission individuel plus long (par exemple 9 ou 10) étant ramenée, lors de la mise en circuit du conduit d'admission individuel plus court (par exemple 10 ou 11) à la longueur de celui-ci, **caractérisé en ce** que chaque conduit d'admission individuel plus long (9, 10) présente une section transversale qui augmente dans la direction d'écoulement et passe, à une distance (a, b) de la tête de cylindre (1) correspondant à la longueur de chaque conduit d'admis-

EP 0 389 834 B1

sion individuel plus court (10, 11), à la section transversale du conduit d'admission individuel plus court, et dans la région de cette augmentation de la section transversale, un orifice de cylindre (22, 24, 26) commande par un clapet de manoeuvre (23, 25, 27) lequel peut être actionné conjointement avec un clapet d'arrêt (18 et respectivement 19) associé au conduit d'admission individuel plus court considéré.

2. Système de conduits d'admission selon la revendication 1 pour un moteur à combustion interne à plusieurs cylindres avec trois soupapes d'admission par cylindre, caractérisé en ce qu'il comprend

    a) un premier conduit d'admission individuel court (11) qui mène à la première soupape d'admission (6) et est muni d'un clapet d'arrêt (19) situé à proximité de son extrémité,

    b) un second conduit d'admission individuel (10) de longueur moyenne qui mène à la seconde soupape d'admission (5), présente à proximité de son extrémité un clapet d'arrêt (18) ainsi que, à une distance (b) de la tête de cylindre (1) correspondant à la longueur du premier conduit d'admission individuel (11), un orifice de cylindre (26) commande par un clapet de manoeuvre (27) et, dans la section entre l'orifice de cylindre (26) et la tête de cylindre (1), une section transversale qui est sensiblement identique à celle du premier conduit d'admission individuel (11) qui est plus grande que la section transversale dans le reste de sa longueur, et

    c) un troisième conduit d'admission individuel (9) de grande longueur qui mène à la troisième soupape d'admission (4) et comporte, à une distance (a) de la tête de cylindre (1) correspondant à la longueur du second conduit d'admission individuel (10), un premier orifice de cylindre (22) avec un clapet de manoeuvre (23) et, à une distance (b) de la tête de cylindre correspondant à la longueur du premier conduit d'admission individuel (11), un second orifice de cylindre (24) avec un clapet de manoeuvre (25); et qui présente dans la section entre le second orifice de cylindre (24) et la tête de cylindre (1), sensiblement la même section transversale que le premier conduit d'admission individuel (11), dans la section entre les deux orifices de cylindre (22, 24), sensiblement la même section transversale que le second conduit d'admission individuel (10) entre la bouche (13) et l'orifice de cylindre (26) de celui-ci, et dans la section entre la bouche (12) et le premier orifice de cylindre (22), une section transversale inférieure à celle dans les deux autres sections.

3. Système de conduits d'admission selon la revendication 1 pour un moteur à combustion interne à plusieurs cylindres avec trois soupapes d'admission par cylindre, caractérisé en ce qu'il comprend un premier conduit d'admission individuel (30) se ramifiant en direction de deux soupapes d'admission (4, 5), et un second conduit d'admission individuel (31') menant à la troisième soupape d'admission (6) et muni d'un clapet d'arrêt (32), et que le premier conduit d'admission individuel (30) comporte, à une distance (c) de la tête de cylindre (1) correspondant à la longueur du second conduit d'admission individuel (31), un orifice de cylindre (33) commandé par un clapet de manoeuvre (34) et, en amont de la ramification, un injecteur (35) qui assure l'injection vers les deux soupapes d'admission (4, 5).

4. Système de conduits d'admission selon la revendication 1 pour un moteur à combustion interne à plusieurs cylindres avec deux soupapes d'admission par cylindre, caractérisé en ce qu'il comprend

    a) un premier conduit d'admission individuel court (39) qui mène à la première soupape d'admission (5') et présente, à proximité de son raccordement à la tête de cylindre (1'), un clapet d'arrêt (46) et, entre sa bouche (48) et ledit clapet d'arrêt (46), un orifice de cylindre (44) commande par un clapet de manoeuvre (45), et

    b) un second conduit d'admission individuel (38) plus long qui mène à la seconde soupape d'admission (4') et présente, à une distance (d) de la tête de cylindre correspondant à la longueur du premier conduit d'admission individuel (39), un premier orifice de cylindre (40) commande par un 'clapet de manoeuvre (41) et, à la même distance (e) à laquelle est prévu dans le premier conduit d'admission individuel (39) l'orifice de cylindre (44), un second orifice de cylindre (42) avec un clapet de manoeuvre (43), la section transversale entre le second orifice de cylindre (42) et la tête de cylindre (1') étant plus grande que dans le reste de la longueur et sensiblement égale à la section transversale du premier conduit d'admission individuel (39) entre l'orifice de cylindre (44) de celui-ci et la tête de cylindre (1').

## Claims

1. An intake manifold assembly for a mulicylinder internal combustion engine with at least two inlet valves (4, 5, 6) per cylinder and with longer and shorter individual intake pipes (9, 10, 11) which each lead to an own inlet valve and the shorter intake pipes(s) (10, 11) of which can be put in operation as the speed and/or the load increase(s), whereby the effective length of each longer individual intake pipe (f. i. 9 or 10), is shortened to the length of a shorter individual intake pipe (f. i. 10 or 11) when the latter is put in operation, characterized in that each longer individual intake pipe (9, 10) has a cross section which increases in flow direction and which is increased to the cross section of the shorter intake pipe(s) (10, 11) in a distance (a, b) from the cylinder head

6

(1) corresponding to the length of each shorter intake pipe, and comprises in the region of this increase in cross section an intake opening (22, 24, 26) which is controlled by a control valve (23, 25, 27) which can be actuated together with a shutoff valve (18 or 19) assigned to the shorter individual intake pipe in question.

2. The intake manifold assembly of claim 1 for a mulicylinder internal combustion engine with three inlet valves per cylinder, characterized by

a) a short first individual intake pipe (11), which leads to a first inlet valve (6) and has a shutoff valve (19) close to its end,

b) a medium length second individual intake pipe (10), which leads to a second inlet valve (5), has a shutoff valve (18) near its end, as well as, at a distance (b) from the cylinder head (1) that corresponds to the length of the first individual intake pipe (11), an intake opening (26) which is controlled by a control valve (27) and has, in the section from the intake opening (26) to the cylinder head (1), essentially the same cross section as the first individual intake pipe (11), which is larger than the cross section in the remaining region, and

c) a long, third individual intake pipe (9), which leads to the third inlet valve (4) and at a distance (a) from the cylinder head (1) corresponding to the length of the second individual intake pipe (10), has a first intake opening (22) with a control valve (23) and, at a distance (b) from the cylinder head corresponding to the length of the first individual intake pipe (11), has a second intake opening (24) with a control valve (25) and, in the section from the second intake opening (24) to the cylinder head (1), has essentially the same cross section as the first individual intake pipe (11), in the section between the two intake openings (22, 24) has essentially the same cross section as the second individual intake pipe (10) between its inlet (13) and its intake opening (26) and, in the section from the inlet (12) up to the first intake opening (22), has a smaller cross section than in the two other section.

3. The intake manifold assembly of claim 1 for a mulicylinder internal combustion engine with three inlet valves per cylinder, characterized in that a first individual intake pipe (30) which is forked to two inlet valves (4, 5), and a second, shorter individual intake pipe (31), which leads to the third inlet valve (6), are provided with a shutoff valve (32) and the first individual intake pipe (30) at a distance (c) from the cylinder head (1) corresponding to the length of the second individual intake pipe (31) has an inlet port (33) which is controlled by a control valve (34), and, before the forking, an injection nozzle (35), which injects towards the two inlet valves (4, 5).

4. The intake manifold assembly of claim 1 for a mulicylinder internal combustion engine with two inlet valves per cylinder, characterized by

a) a short first individual intake pipe (39) which leads to the first inlet valve (5′) has a shutoff valve (46) close to its connection to the cylinder head (1′) and, between its inlet (48) and the shutoff valve (46), an intake opening (44) which is controlled by a control valve (45), and

b) a longer, second individual intake pipe (30), which leads to the second inlet valve (4′) and has, at a distance (d) from the cylinder head which corresponds to the length of the first individual intake pipe (39), a first intake port (40) which is controlled by a control valve (41) and, at essentially the same distance (e) at which the intake port (44) is provided in the first individual intake pipe (39), a second intake port (42) with a control valve (43), the cross section between the first intake opening (42) and the cylinder head (1′) being larger than in the remaining region and essentially equal to the cross section of the first individual intake pipe (39) between its intake port (44) and the cylinder head (1′).

**Fig.1**

III.Stufe    II.Stufe    I.Stufe

a

b

1

7   2    20    9   25    24    23   22    12    16

4

5    18    27   26    10   13    17

8    6    19   11    14   15

21

**Fig.2**

10

18    27    13

26

EP 0 389 834 B1

# F.g.4

# Fig.3

Fig. 5

2'

4'

50

38

d

42 41 40

15'

17'

e

43

16'

5'

48

46

39

45 44

1'

21'

Fig. 6

Pe

f   g   h   i   k

n

EP 0 389 834 B1